# EUROPEAN PATENT SPECIFICATION

(11) **EP 0 393 556 B1**
(45) Date of publication and mention of the grant of the patent: **20.12.1995**
(21) Application number: 90107170.4
(22) Date of filing: 14.04.1990
(51) Int. Cl.: H04N 7/087

(54) **Improvements in applications for information transmitted in the vertical retrace interval of a television signal**
Verbesserungen in Anwendungen für die in den vertikalen Austastlücken eines Fernsehsignals gesendeten Daten
Améliorations dans des applications d'informations transmises pendant l'intervalle de retour vertical de signal de télévision

(30) Priority: 21.04.1989 GB 8909115
(43) Date of publication of application: 24.10.1990
(73) Proprietor: RCA Thomson Licensing Corporation, Princeton, NJ 08540 (US)
(72) Inventor: Aschwanden, Felix, CH-8800 Thalwil (CH)
(74) Representative: Einsel, Robert, Dipl.-Ing.

(56) References cited:
- WO-A-85/02082
- ELECTRONIC COMPONENTS AND APPLICATIONS. vol. 8, no. 3, 1988, EINDHOVEN NL pages 175 - 185; KINGHORN: "ENHANCED COMPUTER-CONTROLLED TELETEXT CIRCUIT SAA5243"

## Description

### BACKGROUND

The introduction of VPS (Video Program System) and VPV (Videotext Programmed VCR), now also called VPT (Videorecorder Programming by Text), in Europe opens new opportunities for increasing the user-friendliness of today's TV receivers. Apart from simplifying the programming of VCRs, for which the two systems originally were intended, further features can be provided in connection with the teletext service. Automatic station name identification and the display of the title of the current program are two features which may be realized utilizing such information. One suitable approach to this end is described in EP-A-0 337 336 which is prior art in the context of Art. 54(3) EPC.

The original purpose of adding the VPS signal to the image-representative TV broadcast signal was to simplify the use of home video recorders. Prior to VPS, these recorders were programmed by means of a timer, which started and stopped the VCR according to the time when the desired TV program of interest was scheduled for transmission.

Occasionally, the program of interest could not be correctly recorded, for example due to delay in the completion of the previous program.

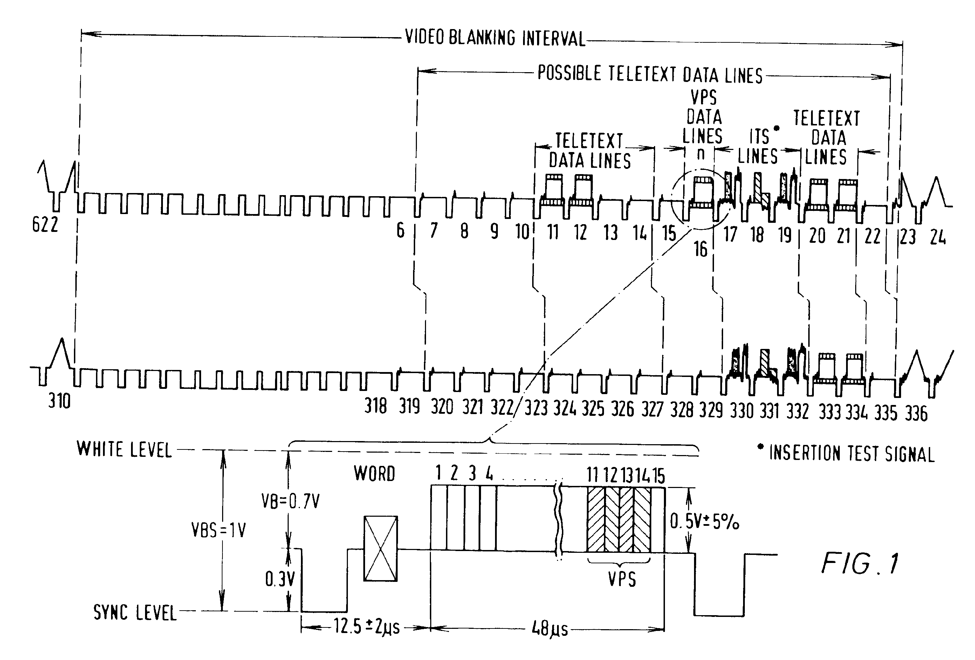

The VPS signal was intended to overcome this drawback by providing an accurate indication of the starting time of a new program. Some properties and the data format of the VPS signal are shown in Fig. 1 of the drawings and are briefly explained below. A more detailed description is available in the literature, (see for example, "VPS-Ein neues System zur beitragsgesteuerten Programmaufzeichnung", Rundfunktech-nische Mitteilungen, Heft 4, 1985).

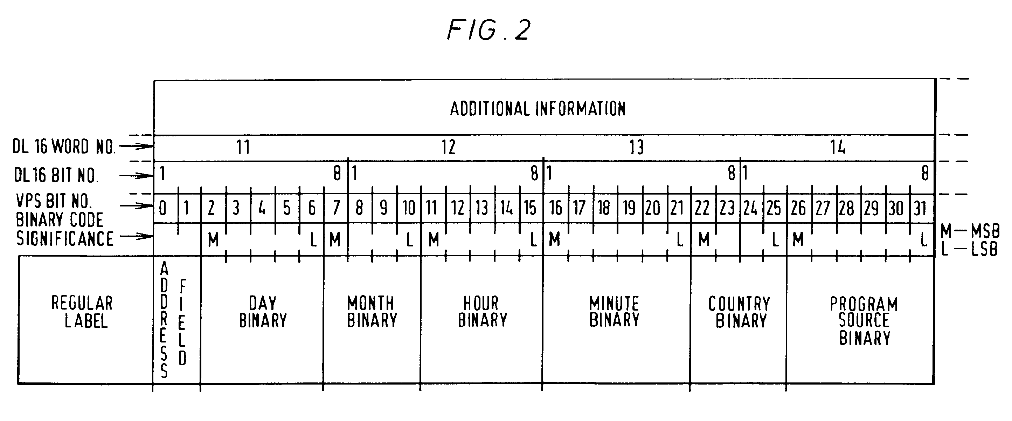

On data line 16 in the vertical blanking (retrace) interval of the TV broadcast signal, the VPS program identification code occupies 4 bytes (11 - 14). The related information of these 4 bytes is shown in Fig. 2 of the drawings, where bits 2 - 21 specify day, month, hours and minutes of the originally scheduled start of the transmitted program. Bits 22 - 25 denote the country and bits 26 - 31 denote the transmitting station or program source.

To make the programming of VCRs even more convenient and reliable, the VPV system (Videotext Programmed VCR) was developed (See "Videotext programmiert Videoheimgeräte (VPV)", Rundfunktechnische Mitteilungen, Heft 5, 1986).

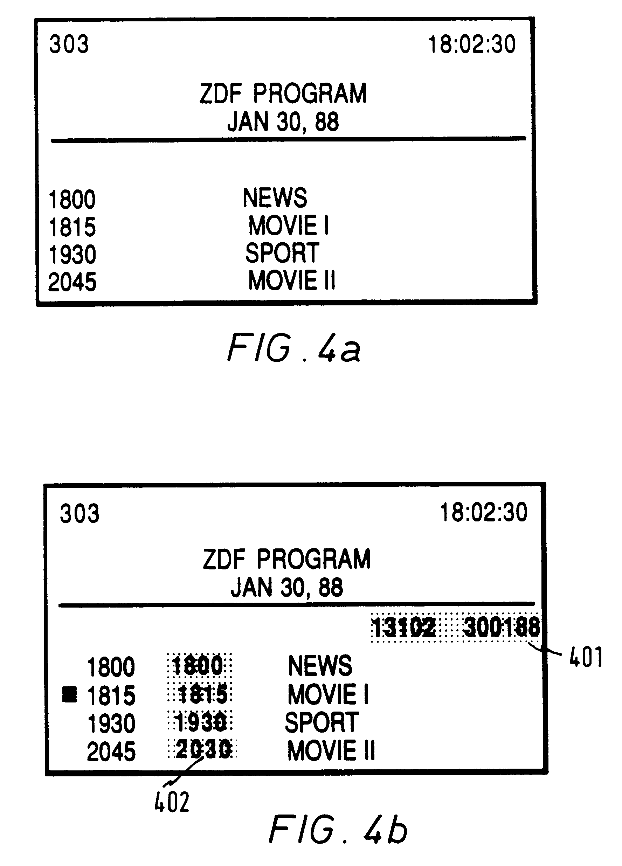

Recording by means of VPV is directed by the automatic transfer of the necessary and correct information to the VCR from the TV program-pages of the teletext service, where the program to be recorded is selected. The user only has to display the appropriate teletext program page and then move a cursor to the desired program title. Upon pressing an appropriate button on the remote control, the necessary VPS program identification information is transferred to the VCR. As can be seen from comparing Figs. 4a and 4b, which represent the display of a teletext page on a TV receiver, certain VPS data, indicated by the reference numerals 401 and 402 in Fig. 4b, are concealed (i.e. not displayed) under normal conditions (see Fig. 4a) and can be made visible by pressing a "reveal" button of the remote control transmitter. Figs. 4a and 4b also show that the concealed data indicated by reference numbers 401, 402 in the teletext TV program-pages correspond exactly to the actually transmitted VPS program identification code accompanying the image-representative signals, except for a binary to decimal conversion. That is, the data indicated by number 401 corresponds to the sequence of country code (13) address field (1), program source (02), and date (300188). The data indicated by reference number 402 corresponds to the originally scheduled transmission times of the various programs (VPS times).

In the VPV application, if the user decides to record a program (see Fig. 4a) scheduled for example at 18:15, he simply moves the cursor to that position and after pressing the appropriate remote control push button, the relevant concealed data (see Fig. 4b) 3001 (day, month) 18:15 (hour, minutes) and 13102 (country, program source) are automatically transferred to a VCR. Note that the "1" in "102" represents address field one, bits number 0 and 1 of the VPS signal. Thereafter, the VCR continuously checks the transmitted VPS signal which accompanies the image-representative signals and, upon coincidence, the VCR starts to record.

It should be mentioned that the scheduled time 20:45 and the VPS-time 20:30 for "Movie II" of Fig. 4b are not identical. This is because the scheduled time has been updated in the meantime after it turned out that the sporting event at 19:30 took longer than was expected when the program schedule was first published. The VPS time always remains unchanged since it is assigned to the program and not to the actual time.

Thus, each of station identification (program source), scheduled transmission time and program title information for many different scheduled future TV transmissions are available for use by a VCR or television receiver equipped to process, respectively, VPS, VPV or teletext information. However, the user of a conventional television receiver is not able to utilize such information to full advantage. That is, while certain TV receivers (for example Grundig Models CUC 2600/2800) are equipped with a teletext decoding system and VCR's may be equipped with a VPS decoder (see "Decoder for an Automatic Video Program Identification System (VPS)", IEEE Transactions on Consumer Electronics, Vol. CE-32, No. 3, August 1986, pp. 162 - 168), the two decoding systems are not customarily included in a single apparatus.

It has been suggested (see IEEE Transactions article cited above) that a VPS decoder can be connected in an unspecified manner in a TV receiver for providing station identification or decoding of TV sound status. In addition, other types of decoder systems for retrieving supplementary data from a broadcast television signal have been proposed (see, for example, U.S. Patent US-A-4,635,121 - Hoffman et al. granted January 6, 1987). In any event, it is desireable to provide support to the user through unambiguous station and program identification. The necessary information is available in a combination of the VPS and teletext signals.

In European Patent Application publication number EP-A-0337336 filed 8 April 1989 which is assigned to the same assignee as the present application, arrangements are described for providing the capability in a single signal processing device (such as a TV receiver) of displaying station identification information along with program title as derived from a combination of VPS and teletext sources.

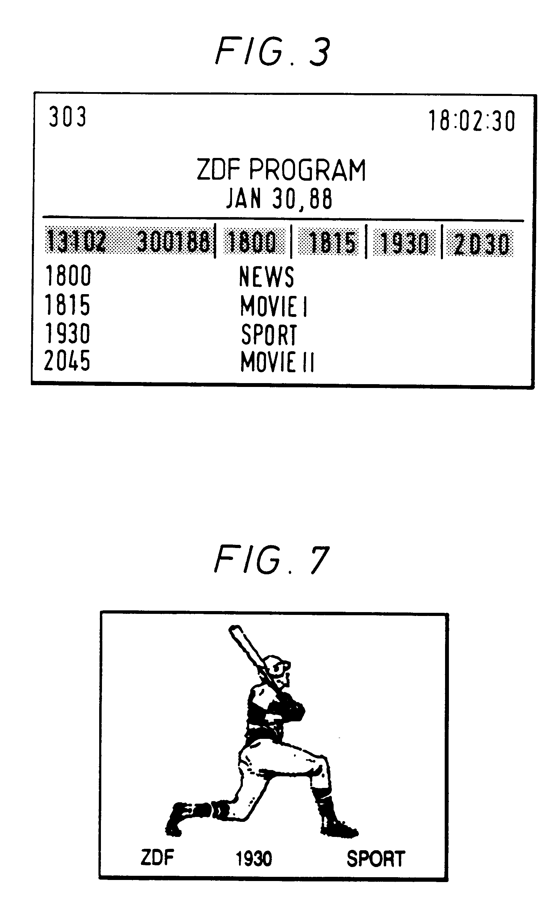

In 1988, the IRT in Munich released new specifications for the VPV (or VPT) system, describing acceptable alternatives for the arrangement of information on the teletext program pages (see Figures 3 and 4b for two permitted alternatives of the location of the same VPS information). Henceforth, the location of the VPS data cannot be expected to be fixed in a single region on the teletext page. With that fact in mind, in order to identify and recover the VPS data and associated program identification (title) information within the time constraints of the data transfer bus (the so-called "I^{2C} bus") associated with a teletext decoder, it is necessary to devise new and improved methods and apparatus whereby station and program identification information located in any one of several possible intervals in a signal can be processed more efficiently for automatic visual presentation to a viewer.

One such improved arrangement is described in EP-A-0 393 555, filed concurrently with and assigned to the same assignee as the present application. In the Hennig arrangement, certain multiple signal channel capabilities of the teletext decoder are utilized to permit rapid processing of the necessary data.

### SUMMARY OF THE INVENTION

In accordance with the present invention, apparatus as claimed in appended claim 1 is provided.

### DRAWINGS

In the drawings:
Figure 1 illustrates a composite video signal during the vertical blanking interval with VPS data on data line 16 and teletext data on lines 11-14 and 20-21;
Figure 2 illustrates the data format of the VPS information on data line 16;
Figure 3 illustrates one permitted format for teletext directory pages;
Figures 4a and 4b illustrate, respectively, a single teletext program page (#303) in the "normal display" and "revealed" modes, where the format of the VPS information in Figure 4b is different from that of Figure 3;
Figure 5 is a block diagram of a portion of a TV receiver constructed in accordance with the present invention and incorporating teletext and VPS decoders;
Figure 6 is a flowchart for a title search method in accordance with the present invention;
Figure 7 illustrates the manner in which station identification and program title may be displayed on screen in accordance with the present invention; and
Figure 8a, 8b and 8c are schematic diagrams for further illustrating the operation of the system of Figure 5.

### DETAILED DESCRIPTION

This invention relates to a system which automatically displays information such as program source (station identification) and the title of the running program, when the TV set or other TV signal processor has been turned on or when a new channel is selected. It is applicable in those countries using teletext or the like. The teletext system in Europe transmits, apart from other material, a listing of the updated TV program pages.

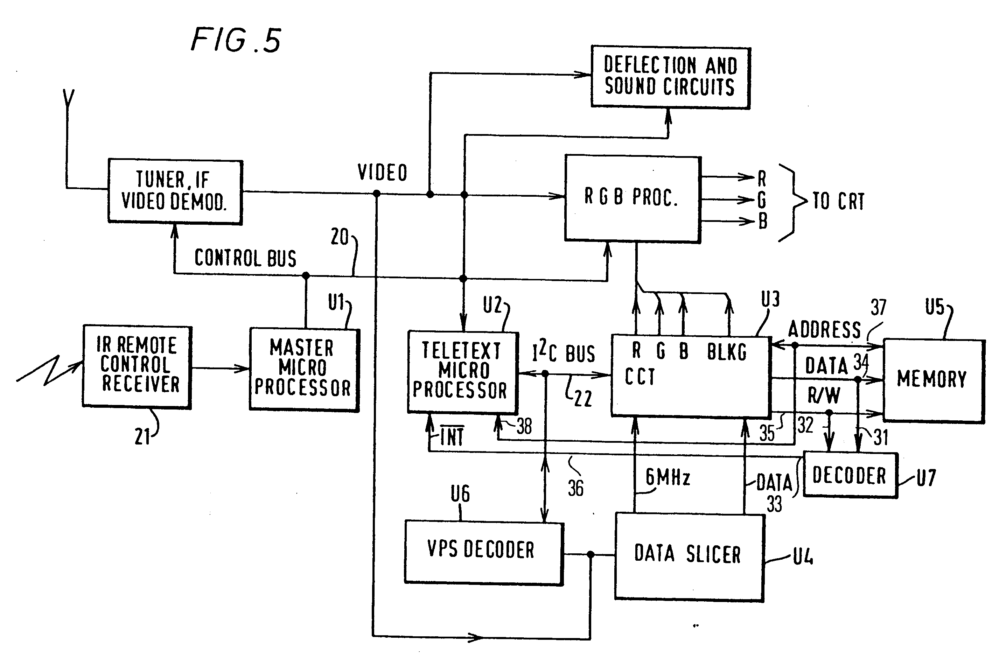

Referring to the drawing, Fig. 5 shows part of the block diagram of a current TV receiver with a built-in teletext decoder circuit. A microprocessor (»P) (e.g. Siemens Type SDA 2011) U1 controls the various stages of the TV receiver by means of a control bus 20 upon receiving a command from an IR remote control receiver 21. The teletext decoder comprises a microprocessor U2, which controls, by means of an 12C bus 22, the function of a CCT decoder circuit U3 (CCT = Computer Controlled Teletext decoder). For a more detailed description of the I2C bus 22, reference should be made to the Philips Technical Publication of 1986 entitled "I2C Bus Specification". See also the Philips Data Handbook - IC 02a, published in 1986, with particular reference to the integrated circuits type SAA 5230 and SAA 5240 described therein.

In the receiver of Fig. 5, composite video is fed to a data slicer U4 (e.g. Siemens Type SAA 5230), which separates the serial teletext data stream from video and which provides a line-locked 6 MHz master clock frequency. Furthermore, a VPS (second) decoder circuit U6, which is added to the standard TV chassis for purposes of the present invention, is connected to the I2C bus 22 and is provided with composite video information. A suitable VPS decoder circuit is described, for example, in the Siemens publication "IC's for Entertainment Electronics", VPS System, Siemens, Edition 5 (1986) where the Siemens Type SDA 5232 and SDA 5640 IC's are shown.

The CCT decoder circuit U3 provides a number of different functions selectable via the I2C bus 22. The title search depends upon the fact that data can be read from or written to a teletext memory U5 at any desired memory location through the I2C bus 22. As a result, messages created in microprocessor U2 can be displayed on the screen of the TV receiver or microprocessor U2 can read and manipulate text stored in memory U5. Basically, the CCT circuit U3 decodes the incoming teletext data stream, stores the selected pages in memory U5 and provides R, G, B and blanking signals when the selected page is to be displayed on the CRT (not shown).

A third decoder U7 having first and second data signal inputs 31 and 32, respectively, and a single logic signal output 33 is provided in accordance with the present invention. Decoder U7 is arranged for detecting the presence of a control code preceding the transmission of VPS information in the following teletext data stream. Decoder U7 may comprise, for example, a logic circuit for detecting the presence of a control signal indicating that following data is to be displayed in the color "magenta".

In the VPS system, the code 1010000 (decimal "5") is designated to represent display of data using the color magenta (see IBA Technical Review, Technical Reference Book, published 1977, "Specification of Standards for Broadcast Television Signals", (Table 3, "Teletext Character Codes")).

The first data signal input 31 is coupled to a "DATA" transfer line 34 extending between CCT decoder U3 and memory U5 while the second data signal input 32 is coupled to a read/write (R/W) control line 35 which extends between CCT decoder U3 and memory U5. The first data signal input 31 is supplied to a data latch and appropriate logic circuits within decoder U7 for detecting the above-noted magenta control code in the data stream on line 34. An "interrupt" output is coupled from logic output 33 to microprocessor U2 via line 36 whenever the R/W signal is active (e.g. "low") and the seven bit teletext data on line 34 corresponds to the value of the magenta control signal (see above). Line address information present on an address line 37 which extends between CCT decoder U3 and memory U5 is coupled to an address input terminal 38 of microprocessor U2 whenever the interrupt signal is present on line 36. The address provided at input terminal 38 is stored temporarily within microprocessor U2 as will be explained in greater detail below.

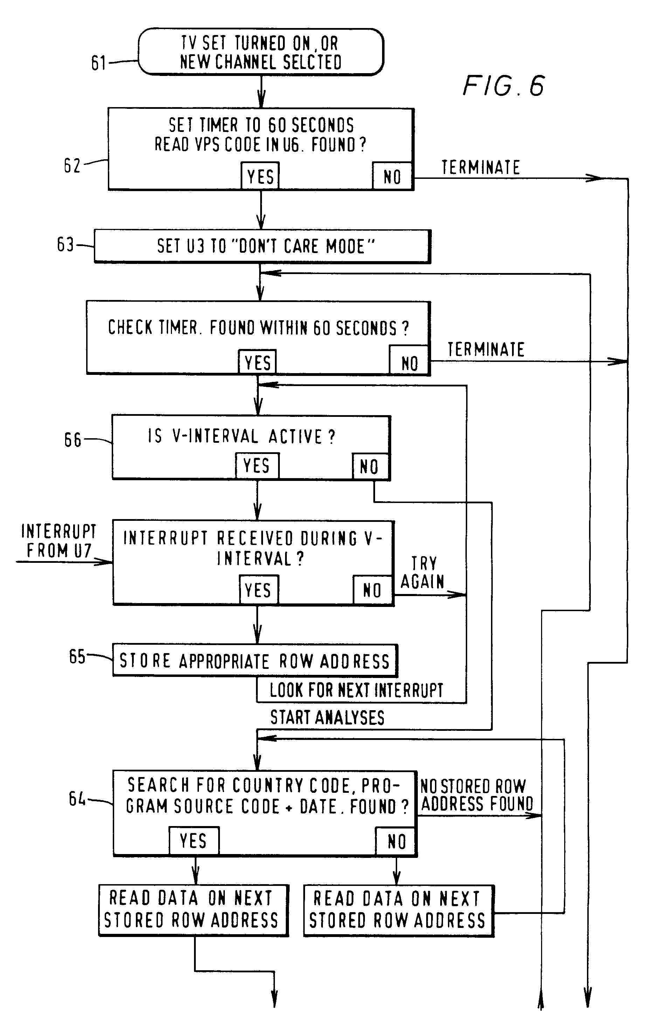

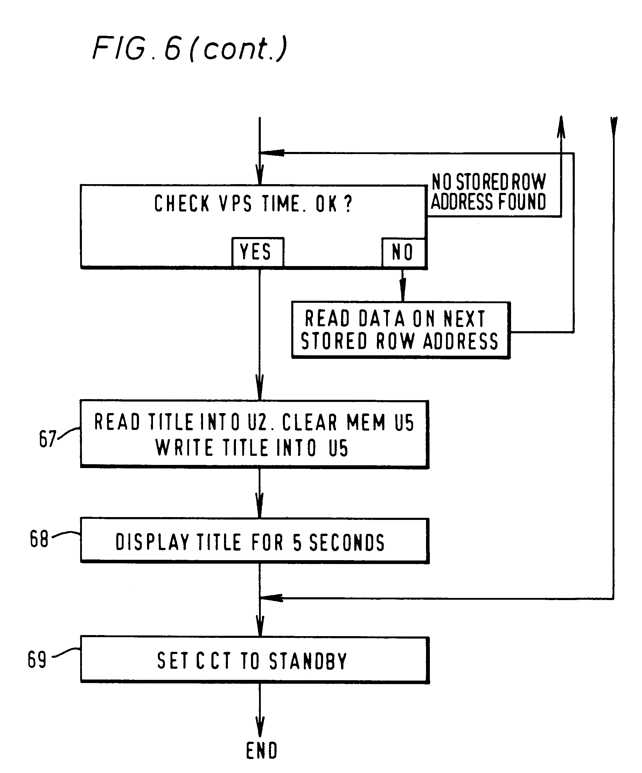

Referring to Fig. 6, the operating sequence according to one aspect of the invention will be described. The title search sequence is initiated upon selecting a new channel or when the TV set is turned on (see block 61). Microprocessor U2 reads the VPS code extracted from the accompanying image-representative video signal by VPS decoder U6 (block 62) and also forces teletext decoder U3 into the "don't care magazine - and page number" status (block 63). In this mode of operation decoder U3 ignores page numbers. It decodes the incoming teletext data stream byte by byte and writes the text into the memory U5. The microprocessor U2 reads the memory content during a subsequent image interval and searches for the concealed VPS program identification information (block 64), transmitted along with the program pages (see Fig. 4b). The complete page however, cannot be read and analyzed before a new page appears, due to the fact that there is a speed limitation or bottleneck associated with the I2C bus 22. Therefore, microprocessor U2 is controlled, for example, to read only those lines where the relevant data is present.

Specifically, according to present practice, the VPS data in the teletext listing is always displayed on the CRT in the color "magenta" (see dotted areas in Figs. 3 and 4b representing such color). That is, a magenta control code (decimal "5") precedes each VPS data block in the teletext data stream detected during the vertical retrace interval. The magenta control code, while it is not displayed, is nevertheless detectable.

To this end, the third decoder U7 is enabled by means of a read/write (R/W) "low" signal on control line 35 whenever teletext data is received and is being written into memory U5 during a vertical retrace interval. When decoder U7 is enabled and the code sequence corresponding to a magenta control code appears on the data transfer line 34, decoder U7 couples an "interrupt" output to microprocessor U2. This interrupt, in turn, causes microprocessor U2 to read and store the existing line address information (block 65) at which the magenta control code and following VPS data is being stored in memory U5. It is sufficient to store only the line or row address in microprocessor U2 so that only five bits of the customary eight to ten bits of address information need be stored. Subsequently, when the vertical retrace interval is terminated and an image interval occurs (see block 66 - "no" response), the data in memory U5 will be relatively stable and the microprocessor U2 will retrieve, in sequence, the VPS data stored at each of the row addresses corresponding to the presence of magenta control codes (see block 64 and following). This operation may last, for example, for twenty milliseconds until new teletext data arrives. That time is sufficient to analyze the rows of data which actually contain a magenta control code. It should be noted that magenta control codes may be present when VPS data is not. However, no "match" will be found and that code will be ignored.

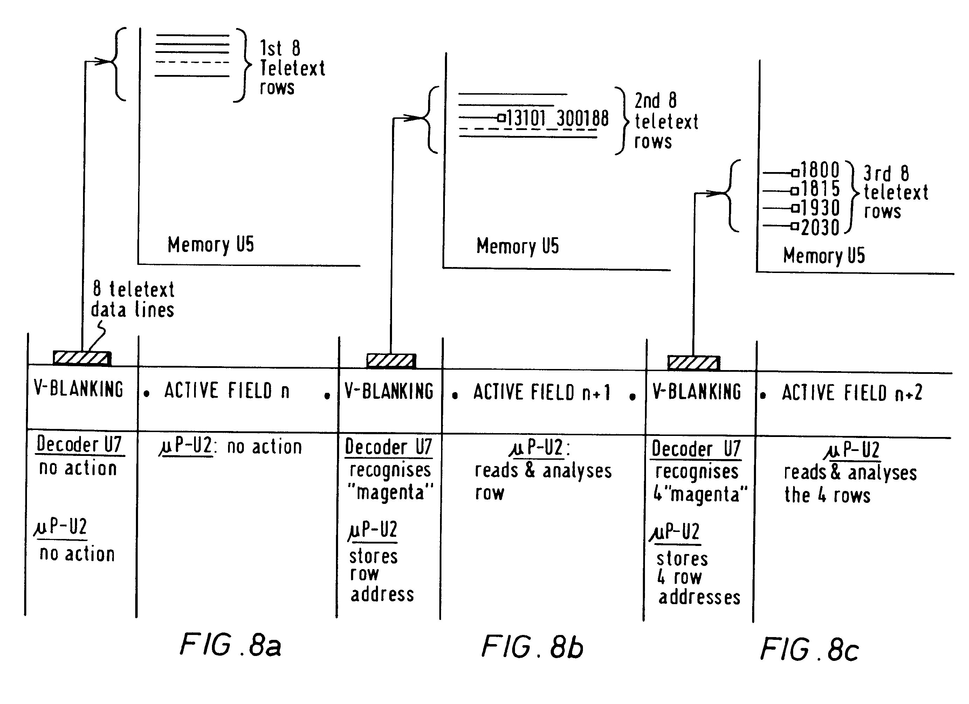

Once correlation (a match or "yes" indication), between the VPS code of the running program and the concealed data in the teletext data stream is recognized, the appropriate text row, containing the title of the running program, is read into microprocessor U2 (block 67). Simultaneously, microprocessor U2 erases memory U5 via the I2C bus 22 and turns the acquisition circuit in teletext decoder U3 off. Thus, no further teletext data is decoded. The title of the running program is then transferred from microprocessor U2 into any desired location in memory U5. Finally the CCT circuit U3 is set into a mixing mode (block 68) thereby superimposing ("punching") the title onto the CRT (Fig. 7). Shortly afterwards teletext decode circuit U3 is forced into "standby" (block 69) and the title display operation is terminated.

This search operation would last indefinitely, should no correlation be achieved. This occurs if a weak signal is received and the teletext signal is not decodeable or when the TV set is connected to a VCR. An additional timerloop automatically terminates the search operation after 30 - 60 seconds, sufficient to allow the program-pages to reappear in the serial teletext data stream. Apart from the third decoder U7, no additional hardware is needed compared to my prior application EP-A-0 337 336. The required software, see flow chart, Fig. 6, can be added into the ROM of the single chip microprocessor U2.

The sequence of events involved in recognizing and processing of VPS data described above may be described in an alternative manner referring to Figures 8a, 8b and 8c of the drawing. In those three figures, the memory U5 is shown diagrammatically as a rectangular array of memory spaces in which data is stored in a sequence similar to the physical sequence of scanning of a CRT display. However, it should be recognized that other configurations of memory U5 may be utilized.

Referring to Figures 8a, 8b and 8c, in each of those figures, a time interval corresponding to a combination of a vertical blanking (V-Blanking) or retrace interval followed by an active image - display field interval is shown (fields "n", "n+1" and "n+2"). Furthermore, it is assumed for illustration that eight television scanning lines in each retrace interval are set aside for transmission of teletext data. A total of three fields would then be required to transmit a complete twenty-four row (line) teletext page.

Assuming that the program page configuration of Fig. 4b is used, it can be seen that the heading portion of the page (e.g. uppermost eight lines) does not contain any VPS data. Since none of those first eight lines contain a magenta control code, the microprocessor U2 is not required to store any address during vertical retrace and does not perform any searching during the active field "n" (Fig. 8a). During the next vertical retrace interval (Fig. 8b), one magenta control code preceding the identification information block 401 will be recognized by detector U7. Microprocessor U2 will therefore store the corresponding row address for later processing during the field "n+1" as explained above. Finally, during the third retrace interval (Fig. 8c), four magenta control codes will be recognized and four row addresses will be stored for subsequent processing. During the active field "n+2", each of the four rows of data containing VPS information will be compared to data read by VPS decoder U6 from the accompanying image-representative information. If coincidence is found between the output from decoder U6 and any one of the rows of data read from memory U5, the appropriate title information for the running program (see Fig. 4b) will then be displayed as described above.

While the invention has been described in terms of a preferred embodiment, various modifications may occur to persons of ordinary skill in this art, which modifications may fall within the scope of the invention as pointed out in the following claims.

## Claims

1. A television signal processing apparatus for processing television signals including image-representative information and a plurality of accompanying segments of supplementary information, said supplementary information including program identification information, a listing of program title information and program source information, said supplementary information being encoded during vertical blanking intervals of the signal with said program identification information being disposed within vertical blanking intervals of related image-representative information and also being included within said listing, signal processing apparatus comprising:
tuning means for selectively receiving television signals transmitted by individual program sources, the received signals including image-representative information and accompanying segments of supplementary information,
first signal decoder means (U3) for decoding said listing and said included program identification information,
memory (U5) means for storing program title information and included program identification information decoded by said first signal decoder means,
a first controller means (U2) coupled to said first signal decoder means (U3) for selectively transferring said segments of supplementary information among said memory means, said first decoder means and said first controller means,
second signal decoder means (U6) for decoding said program identification information disposed within blanking intervals of related image-representative information, and
a display controller means (U3) for displaying text information on a display screen;
said first controller means (U2) for, upon initial reception of signals from an individual program source by said tuning means, sequentially causing said second signal decoder means to decode said program identification information accompanying related image-representative information;
said first signal decoder means for, under control of said first controller means, identifying the same program identification information within said listing and recovering corresponding program title information from said listing,
said program identification information included within said listing being accompanied by coded display control signals, and
said apparatus also comprising a third signal decoder means (U7) for detecting the presence of said accompanying coded display control signals in said supplementary information, and for causing storage of memory address information in response thereto corresponding to the location of said included program identification information in said memory means,
said first controller means (U2) being responsive to said memory address information when controlling said first signal decoder means and said first controller means (U2), for transfering a particular one of said program title information from said memory means to said display controller means (U3) for display along with related image-representative information, in response to said memory address information.

2. Signal processing apparatus according to Claim 1 characterized in that said first controller means (U2) is a microprocessor and said third signal decoder means (U7) is coupled to said first signal decoder means for decoding digitally encoded display color signals indicative of the presence of program identification information, said third signal decoder means having an output coupled to said first controller means for applying an interrupt signal thereto.

3. Signal processing apparatus according to Claim 2 characterized in that said listing comprises teletext information, said first signal decoder means comprises a teletext decoder system (U2) and said third signal decoder means (U7) is arranged for detecting control signals corresponding to a magenta display color.

4. Signal processing apparatus according to Claim 2 characterized in that said first controller means (U2), in response to an interrupt signal from said third signal decoder means (U7) stores said address information.

5. Signal processing apparatus according to Claim 4 characterized in that said first controller means (U2) and said first decoder means (U3) are adapted to interact to search said memory means according to said address information stored by said first controller means.

6. Signal processing apparatus according to Claim 5 characterized in that said second signal decoder means comprises a decoder system for decoding VPS signals, said first controller means (U2) comprises a microprocessor and said third signal decoder means (U7) is arranged for detecting control signals corresponding to a magenta display color.

7. Signal processing apparatus according to Claim 3 characterized in that said first controller means (U2) provides first control signals to said first signal decoder means, upon initial reception of a running program, to cause said first signal decoder means (U3) to search teletext transmissions for program identification information matching corresponding information provided by said second signal decoder means.

## Patentansprüche

1. Fernsehsignal-Verarbeitungsgerät zur Verarbeitung von Fernsehsignalen, beinhaltend bildrepräsentative Information und mehrere begleitende Segmente von Ergänzungsinformation, wobei die Ergänzungsinformation Programm-Identifizierungs-Information, eine Liste von Programm-Titelinformation und Programm-Quelleninformation enthält, wobei die Ergänzungsinformation während der Vertikal-Austastintervalle des Signals codiert ist, wobei die Programm-Identifikations-Information innerhalb der Vertikal-Austastintervalle von verwandter bildrepräsentativer Information vorgesehen ist und auch in der Liste oder dem Listing enthalten ist, welches Signal-Verarbeitungsgerät enthält:
- ein Abstimmittel zum wahlweisen Empfang von Fernsehsignalen, die von individuellen Programmquellen ausgestrahlt werden, wobei die Empfangssignale bildrepräsentative Information und begleitende Segmente von Ergänzungsinformation beinhalten;
- ein erstes Signal-Dekodermittel (U3) zum Dekodieren des Listings bzw. der Liste und die auch enthaltene Programm-Identifikations-Information;
- ein Speichermittel (U5) zum Speichern von Programm-Titelinformation und der enthaltenen Programm-Identifikations-Information, die von dem ersten Signal-Dekodermittel dekodiert werden;
- ein erstes Steuermittel (U2), das mit dem ersten Signal-Dekodermittel (U3) zum wählbaren Übertragen der Segmente von Ergänzungsinformation zwischen dem Speichermittel, dem ersten Dekodermittel und dem ersten Steuermittel gekoppelt ist;
- ein zweites Signal-Dekodermittel (U6) zum Dekodieren der Programm-Identifikations-Information , die innerhalb der Austastintervalle der verwandten bildrepräsentativen Information vorgesehen ist; und
- ein Darstellungs-Steuermittel (U3) zur Darstellung von Textinformation auf dem Schirm;
- wobei das erste Steuermittel (U2) bei anfänglichem Erhalt von Signalen von einer individuellen Programmquelle von dem Abstimmittel sequentiell oder in Folge das zweite Signal-Dekodermittel zum Dekodieren der Programm-Identifikations-Information veranlaßt, die die verwandte bildrepräsentative Information begeleitet;
- wobei das erste Signal-Dekodermittel unter der Steuerung des ersten Steuermittels dieselbe Programm-Identifikations-Information innerhalb des Listings oder der Liste identifiziert und die korrespondierende Programm-Titelinformation aus dem Listing wiedergewinnt;
- wobei die im Listing oder in der Liste enthaltene Programm-Identifikations-Information von kodierten Darstellungs-Steuersignalen begeleitet ist; und
- wobei das Gerät auch ein drittes Signal-Dekodermittel (U7) enthält zum Erfassen des Vorliegens oder der Anwesenheit der begleitenden codierten Darstellungs-Steuersignale in der Ergänzungsinformation und um ansprechend darauf das Speichern von Speicher-Adresseninformation, die mit dem Ort der enthaltenen Programm-Identifikations-Information in dem Speichermittel korrespondiert, zu veranlassen;
- wobei das erste Steuermittel (U2) auf die Speicher-Adresseninformation anspricht, wenn das erste Signal-Dekodermittel und das erste Steuermittel (U2) gesteuert wird, um eine bestimmte der Programm-Titelinformation aus dem Speichermittel zu dem Darstellungs-Steuermittel (U3) zu übertragen, zum Darstellen zusammen mit Bezug dazu habender bildrepräsentativer Information, ansprechend auf die Speicher-Adresseninformation.

2. Signal-Verarbeitungsgerät nach Anspruch 1, **dadurch gekennzeichnet,** daß das erste Steuermittel (U2) ein Mikroprozessor ist und das dritte Signal-Dekodermittel (U7) mit dem ersten Signal-Dekodermittel gekoppelt ist, zum Dekodieren von digital codierten Darstellungs-Farbsignalen, die kennzeichnend für das Vorliegen oder die Anwesenheit von Programm-Identifikations-Information sind, wobei das dritte Signal-Dekodermittel einen Ausgang hat, der mit dem ersten Steuermittel zum Zuführen eines Interrupt-Signals gekoppelt ist.

3. Signal-Verarbeitungsgerät nach Anspruch 2, **dadurch gekennzeichnet,** daß das Listing oder die Liste Teletext-Information enthält, daß das erste Signal-Dekodermittel ein Teletext-Dekodersystem (U2) aufweist, und daß das dritte Signal-Dekodermittel (U7) zum Erfassen von Steuersignalen ausgebildet ist, die mit einer Magenta-Darstellungsfarbe korrespondieren.

4. Signal-Verarbeitungsgerät nach Anspruch 2, **dadurch gekennzeichnet**, daß das erste Steuermittel (U2) - ansprechend auf ein Interrupt-Signal von dem dritten Signal-Dekodermittel (U7) - die Adress-Information speichert.

5. Signal-Verarbeitungsgerät nach Anspruch 4, **dadurch gekennzeichnet**, daß das erste Steuermittel (U2) und das erste Dekodermittel (U3) zum Zusammenwirken angepaßt sind, um das Speichermittel entsprechend der Adresseninformation, die von dem ersten Steuermittel gespeichert wurde, abzusuchen.

6. Signal-Verarbeitungsgerät nach Anspruch 5, **dadurch gekennzeichnet,** daß das zweite Signal-Dekodermittel ein Dekodersystem zum Dekodieren von VPS-Signalen enthält, wobei das erste Steuermittel (U2) einen Mikroprozessor enthält und das dritte Signal-Dekodermittel (U7) ausgebildet ist, um Steuersignale zu erfassen, die mit einer Magenta-Darstellungsfarbe korrespondieren.

7. Signal-Verarbeitungsgerät nach Anspruch 3, **dadurch gekennzeichnet**, daß das erste Steuermittel (U2) für das erste Signal-Dekodermittel erste Steuersignale bereitstellt, bei anfänglichem Erhalt eines Laufprogrammes, um das erste Signal-Dekodermittel (U3) zu veranlassen, Teletext-Übertragungen auf Programm-Identifikations-Informationen hin zu überprüfen oder abzusuchen, die zu der korrespondierenden Information paßt oder mit ihr übereinstimmt, die von dem zweiten Signal-Dekodermittel bereitgestellt wird.

## Revendications

1. La présente invention se présente sous la forme d'un équipement de traitement de signaux de télévision utilisé pour traiter des signaux de télévision contenant non seulement les informations constituant l'image mais également un ensemble de segments d'informations complémentaires associées, lesdites informations complémentaires comportant l'identifiant du programme, son titre sous forme de liste et sa source. En outre, lesdites informations complémentaires sont codées au cours des intervalles de suppression de trame du signal, ledit identifiant de programme étant disposé à la fois dans les intervalles de suppression de trame des informations constituant l'image, et dans ladite liste de titres. Cet équipement de traitement de signaux se compose :
- d'un dispositif de réglage permettant de recevoir de manière sélective les signaux de télévision émis par les sources de programmes respectives, les signaux reçus contenant les informations constituant l'image et les segments d'informations complémentaires associées;
- d'un premier décodeur (U3) permettant de décoder ladite liste de titres et ledit identifiant de programme ;
- d'une mémoire (U5) permettant de stocker ladite liste de titres et ledit identifiant de programme après décodage par ledit premier décodeur;
- d'un premier contrôleur (U2) couplé audit premier décodeur de signaux (U3) permettant d'échanger de manière sélective lesdits segments d'informations complémentaires entre ladite mémoire, ledit premier décodeur et ledit premier contrôleur;
- d'un deuxième décodeur de signaux (U6) permettant de décoder ledit identifiant de programme disposé dans les intervalles de suppression de trame des informations constituant l'image;
- d'un contrôleur d'affichage (U3) permettant d'afficher ces informations sous forme de texte sur un écran d'affichage.
Sur réception de signaux émis par une source de programmes, ledit premier contrôleur (U2) fait décoder de manière sélective par ledit deuxième décodeur de signaux ledit identifiant de programme transmis avec lesdites informations constituant l'image.
Piloté par ledit premier contrôleur, ledit premier décodeur de signaux identifie les informations correspondant à l'identifiant de programme dans ladite liste de titres, puis en extrait le titre de programme correspondant.
Ledit identifiant de programme contenu dans ladite liste étant accompagné de signaux de commande d'affichage codés, ledit équipement est également doté d'un troisième décodeur de signaux (U7) permettant de détecter la présence desdits signaux de commande d'affichage codés accompagnant lesdites informations complémentaires, et permettant de stocker en réponse audits signaux l'adresse mémoire correspondant à l'emplacement dudit identifiant de programme dans ladite mémoire.
Ledit premier contrôleur (U2) réagit auxdites adresses mémoires lorsqu'il pilote ledit premier décodeur de signaux et ledit premier contrôleur (U2) en transférant l'un parmi lesdits titres de programmes de ladite mémoire vers ledit contrôleur d'affichage (U3) de manière à les incruster sur l'image associée en réponse auxdites adresses mémoires.

2. La présente invention décrit un équipement de traitement de signaux conforme à la Revendication 1, caractérisé en ce que ledit premier contrôleur (U2) se présente sous la forme d'un microprocesseur, ledit troisième décodeur de signaux (U7) est couplé audit premier décodeur de signaux de manière à décoder les signaux de couleur d'affichage codés numériquement et indiquant la présence d'informations identifiant le programme, et ledit troisième décodeur de signaux est doté d'une sortie couplée avec ledit premier contrôleur de manière à appliquer un signal d'interruption à ce dernier.

3. La présente invention décrit un équipement de traitement de signaux conforme à la Revendication 2, caractérisé en ce que ladite liste de titres contient des informations télétexte, ledit premier décodeur de signaux comporte un système de décodage télétexte (U2), et ledit troisième décodeur de signaux (U7) est configuré de manière à détecter des signaux de commande correspondant à la couleur d'affichage magenta.

4. La présente invention décrit un équipement de traitement de signaux conforme à la Revendication 2, caractérisé en ce que ledit premier contrôleur (U2), en réponse audit signal d'interruption délivré par ledit troisième décodeur de signaux (U7) enregistre lesdites adresses.

5. La présente invention décrit un équipement de traitement de signaux conforme à la Revendication 4, caractérisé en ce que ledit premier contrôleur (U2) et ledit premier décodeur (U3) dialoguent de manière à lire ladite mémoire en fonction desdites adresses contenues dans ledit premier contrôleur.

6. La présente invention décrit un équipement de traitement de signaux conforme à la Revendication 5, caractérisé en ce que ledit deuxième décodeur de signaux comporte un système de décodage permettant de décoder les signaux VPS, ledit premier contrôleur (U2) comporte un microprocesseur et ledit troisième décodeur de signaux (U7) est configuré de manière à détecter des signaux de commande correspondant à la couleur d'affichage magenta.

7. La présente invention décrit un équipement de traitement de signaux conforme à la Revendication 3, caractérisé en ce que, sur réception d'un programme de télévision, ledit premier contrôleur (U2) délivre des signaux de commande audit premier décodeur de signaux (U3) de manière à faire rechercher par ledit premier décodeur de signaux dans les informations télétexte l'identifiant de programme correspondant aux informations associées délivrées par ledit deuxième décodeur de signaux.
